# FASCICULE DE BREVET EUROPEEN

(11) **EP 1 943 111 B1**
(45) Date de publication et mention de la délivrance du brevet: **23.09.2009**
(21) Numéro de dépôt: 06806945.9
(22) Date de dépôt: 03.10.2006
(51) Int. Cl.: B60C 9/09, B60C 9/12, B60C 9/14

(54) **PNEUMATIQUE COMPORTANT UN ÉLÉMENT DE RENFORT BIÉLASTIQUE**
REIFEN MIT EINEM BIELASTISCHEN VERSTÄRKUNGSELEMENT
TYRE COMPRISING A BIELASTIC REINFORCING ELEMENT

(30) Priorité: 27.10.2005 FR 0511122
(43) Date de publication de la demande: 16.07.2008
(73) Titulaire: Société de Technologie Michelin, 63000 Clermont-Ferrand (FR); Michelin Recherche et Technique S.A., 1463 Granges-Paccot (CH)
(72) Inventeur: DUCHEMIN, Sylvie, 63200 Riom (FR); LACOUR, Emmanuel, 63130 Royat (FR)
(74) Mandataire: Dequire, Philippe Jean-Marie Denis
(86) Numéro de dépôt international: PCT/EP2006/067003
(87) Numéro de publication internationale: WO 2007/048683

(56) Documents cités:
- US-A- 3 789 900
- US-B1- 6 634 397
- PATENT ABSTRACTS OF JAPAN vol. 2000, no. 10, 17 novembre 2000 (2000-11-17) & JP 2000 198316 A (YOKOHAMA RUBBER CO LTD:THE), 18 juillet 2000 (2000-07-18)

## Description

L'invention concerne un pneumatique comportant au moins un élément de renfort biélastique circonférentiel étant constituée d'un tissu biélastique.

De façon classique, les pneumatiques sont sans cesse soumis à de nombreuses sollicitations mécaniques qui ont pour conséquence directe que certains produits moins bien conçus ont des durées de vie beaucoup plus courtes que ceux qui prennent en compte les exigences les plus sévères. Ceci est particulièrement véridique pour les pneumatiques de type agricoles, qui subissent continuellement l'environnement hostile et les multiples aléas des terres agricoles, souvent avec des charges importantes, associées à de faibles pressions, en outre pour limiter les effets de compaction et pour augmenter le rendement.

En conséquence un premier objet de l'invention consiste en un pneumatique comprenant au moins une, et de préférence au moins deux, structures de renfort de type carcasse (bias ou radiales), l'une interne et l'autre externe, chacune desdites structures de renfort de type carcasse s'étendant circonférentiellement depuis le bourrelet vers ledit flanc, et est ancrée de chaque côté du pneumatique dans un bourrelet dont la base est destinée à être montée sur un siège de jante, chaque bourrelet se prolongeant radialement vers l'extérieur par un flanc, les flancs rejoignant radialement vers l'extérieur une bande de roulement, ledit pneumatique comportant par ailleurs au moins un élément de renfort biélastique circonférentiel étant constituée d'un tissu biélastique dans lequel ledit tissu utilisé est un tricot biélastique, soit un tissu à mailles dont les boucles formant les mailles sont susceptibles de se déplacer les unes par rapport aux autres dans le sens du tricotage et dans le sens perpendiculaire au tricotage, ledit renfort biélastique étant agencé de façon à s'étendre sensiblement parallèlement le long d'une portion d'une structure de renfort (de type carcasse ou de renfort sommet).

L'utilisation d'un élément de renfort biélastique améliore la résistance à la propagation des fissures. L'endurance et la durée de vie des produits peut ainsi être améliorée. De manière avantageuse, en fonction des propriétés précises recherchées, on sélectionne une position de l'élément de renfort parmi une pluralité de positions potentielles par rapport aux structures de renfort de type carcasse et/ou sommet (en cas de présence de renfort de sommet) : par exemple, intérieurement, ou extérieurement, ou entre deux structures. Plusieurs renforts biélastiques peuvent aussi occuper diverses combinaisons de ces positions. Une telle architecture est particulièrement avantageuse pour les pneumatiques de type agricole. En utilisation, la plupart des pneumatiques de type agricole nécessitent une adaptation de la pression en fonction du sol : route ou terre agricole, la pression étant sensiblement plus faible dans ce dernier cas afin de limiter la compaction du sol et diminuer le risque d'endommagement des cultures. Par exemple, certains pneumatiques ont une pression nominale de 3.2 bars pour la route, cette pression devant être réduite jusqu'à un bar pour roulage sur sol agricole. Les pressions à utiliser sont souvent déterminées en fonction des vitesses (habituellement comprises entre 10 et 90 km/h) et des charges (qui peuvent atteindre près de 15 tonnes par pneumatique). Pour faciliter ces manipulations, certains véhicules agricoles sont équipés de dispositifs permettant de piloter ou de modifier aisément la pression des pneumatiques. Plus récemment, sont apparus sur le marché des pneumatiques agricoles à basse pression, adaptés pour routage sur route et/ou sur terre agricole en conservant toujours une pression identique. Les pneumatiques agricoles sont par ailleurs souvent munis de barrettes servant à la traction lors d'utilisation sur des sols meubles.

De manière avantageuse, ledit élément de renfort biélastique est en majeure partie positionné dans la portion du flanc située radialement extérieurement à une position correspondant à H/2.

Selon un mode de réalisation avantageux, le pneumatique comporte au moins une structure de renfort de sommet, comprenant chacune une série de fils de renfort de sommet dont chacun est disposé de façon à s'étendre transversalement.

Selon un autre exemple de réalisation, ledit élément de renfort biélastique est en majeure partie positionné dans la zone du sommet du pneumatique.

Selon un mode de réalisation avantageux, ledit élément de renfort biélastique comporte une longueur minimale correspondant à 1/10 de l'arc L, l'arc. L correspondant sensiblement au parcours des structures de renforts de type carcasse entre la position correspondant à H/2 et une droite passant par le point N et perpendiculaire au point d'intersection avec la portion externe de l'épaule, le point N d'extrémité d'épaulement étant défini, dans la zone de l'épaule du pneumatique, par la projection orthogonale sur la surface extérieure du pneumatique de l'intersection des tangentes aux surfaces d'une extrémité axialement extérieure de la bande de roulement (sommet des barrettes) d'une part et de l'extrémité radialement extérieure d'un flanc d'autre part.

De manière avantageuse, la longueur de l'élément de renfort est supérieure à 70% de la longueur de l'arc L, et encore plus préférentiellement supérieure à 80% de la longueur de l'arc L.

Selon un autre mode de réalisation avantageux, le tissu biélastique présente au moins l'une et de préférence l'ensemble des caractéristiques suivantes :
- un taux d'allongement élastique d'au moins 8%,
- une taille de maille inférieure ou égale à 150 mailles par décimètres, et de préférence 200 mailles par décimètres.

Ledit tissu comprend de préférence au moins un matériau choisi parmi les polyamides, les polyesters, la rayonne, le coton, la laine, l'aramide, la soie, le lin.

Selon un autre mode de réalisation avantageux, le tissu comprend une certaine proportion de fils élastiques.

Selon un autre mode de réalisation avantageux, le tissu ou tricot présente une épaisseur pouvant se situer entre 0,2 mm et 2 mm, et de préférence entre 0,4 et 1,2 mm.

Selon un autre mode de réalisation avantageux, le tissu ou tricot présente une masse surfacique généralement située entre 70 et 700 g/m2, et de préférence entre 140 et 410 g/m2.

Selon un autre mode de réalisation avantageux, le tricot biélastique est composée d'au moins un polymère choisi parmi les polymères thermodurcissable, les polymères thermoplastiques.

Selon encore un autre mode de réalisation avantageux, la structure de renfort de sommet comporte deux ou plus arrangements de fils configurés avec des angles opposés et sensiblement symétriques. Lesdits angles des fils sont de préférence compris entre 5 et 70 degrés.

Les fils de la structure de renfort de type carcasse et les fils de renfort de sommet peuvent être soit de nature semblable (par exemple tous textiles) ou encore de nature différente : par exemple, les fils de la structure de renfort de type carcasse sont de type textile et les fils de renfort de sommet sont de type métallique.

De manière avantageuse, le tissu utilisé est un tricot biélastique, c'est-à-dire un tissu à mailles dont les boucles formant les mailles sont susceptibles de se déplacer les unes par rapport aux autres dans le sens du tricotage et dans le sens perpendiculaire au tricotage. Par biélastique, on entend que le matériau en question possède des propriétés le rendant élastique dans au moins deux directions sensiblement perpendiculaires, et de préférence dans toutes les directions.

L'utilisation de fibres élastomériques pour réaliser ce tissus ou tricot n'est donc pas indispensable. On peut éventuellement en prévoir en faible proportion pour favoriser la mise en oeuvre et faciliter le retour élastique.

Si toutefois on ne souhaite qu'un découplage mécanique, l'utilisation d'une matrice élastomérique peut permettre d'amplifier la capacité de découplage.

Le terme de tissus biélastique recoure également des structures qui ont la possibilité de se déformer élastiquement de manière réversible mais qui ne sont pas forcément obtenues par tricotage. Il peut s'agir en particulier de structures obtenues au crochet ou des assemblages sous forme de bouclettes ou des aiguilletés.

L'entrelacement des boucles forme un réseau déformable de manière élastique dans deux directions sensiblement perpendiculaires. Dans le cas avantageux où on utilise un tricot biélastique, la capacité de déformation de ce tricot biélastique selon l'invention résulte en particulier de la structure en tricot, les libres constituant le tricot glissant les unes par rapport aux autres dans le réseau maillé. De manière générale, le taux d'allongement élastique du tricot biélastique selon l'invention est d'au moins 10% dans au moins une des deux directions d'allongement. Il est avantageusement de 50% ou plus, voire plus particulièrement de 100% ou plus. Ces propriétés s'entendent avant la mise en oeuvre du tricot dans le pneumatique selon l'invention.

Le sens de pose du tricot biélastique sur les zones à protéger est avantageusement tel que la direction du tricot ayant le taux d'allongement le plus important est parallèle à la direction de la contrainte la plus élevée agissant sur ladite zone.

D'autres caractéristiques et avantages de l'invention apparaîtront à la lecture d'un exemple de réalisation d'un pneumatique conforme à l'invention, en référence aux figures en annexe, dans lesquelles :

-la figure 1a représente une coupe transversale d'une moitié d'un pneumatique, avec un flanc et une portion du sommet, avec un premier exemple de positionnement d'un élément de renfort bi-élastique ;

-la figure 1b représente une coupe similaire à celle de la figure 1a, avec un second exemple de positionnement d'un élément de renfort bi-élastique ;

-la figure 1c représente une coupe similaire à celle de la figure 1a, avec un troisième exemple de positionnement d'un élément de renfort bi-élastique ;

-la figure 2 représente une coupe similaire à celle de la figure 1a, avec un quatrième exemple de positionnement d'un élément de renfort bi-élastique ;

-la figure 3 représente une coupe similaire à celle de la figure 1a, avec un cinquième exemple de positionnement d'un élément de renfort bi-élastique ;

-la figure 4 représente une coupe similaire à celle de la figure 1a, avec un exemple de positionnement de plusieurs éléments de renfort bi-élastiques ;

-la figure 5 représente une coupe similaire à celle de la figure 1a, avec un autre exemple de positionnement de plusieurs éléments de renfort bi-élastiques ;

-la figure 6 représente une coupe similaire à celle de la figure 1a, avec encore un autre exemple de positionnement de plusieurs éléments de renfort bi-élastiques ;

-la figure 7 représente une coupe similaire à celle de la figure 1a, avec un autre exemple de positionnement d'un élément de renfort bi-élastique, cette fois dans la zone du sommet ;

-les figures 8a et 8b représentent des vues similaires à celle de la figure 1a, avec toujours d'autres exemples de positionnements d'un élément de renfort bi-élastique ;

-la figure 9 représente une vue similaire à celle de la figure 1a, avec encore un autre exemple de positionnement d'un élément de renfort bi-élastique ;

-la figure 10 représente une vue similaire à celle de la figure 1a, avec toujours un autre exemple de positionnement d'un élément de renfort bi-élastique ;

- la figure 11 représente une vue similaire à celle de la figure 1a, avec un dernier exemple de positionnement d'un élément de renfort bi-élastique.

Dans le texte, on adoptera la terminologie "inférieure" pour désigner toute couche ou surface radialement orientée vers le pneumatique et "supérieure" pour désigner toute couche ou surface radialement orientée à l'opposé du pneumatique, notamment une couche ou surface en contact avec l'air.

On entend par « axiale » une direction parallèle à l'axe de rotation du pneumatique ; cette direction peut être « axialement intérieure » lorsqu'elle est dirigée vers l'intérieur du pneumatique et « axialement extérieure » lorsqu'elle est dirigée vers l'extérieur du pneumatique.

Le terme «structure de renfort de sommet » est utilisé dans le texte. De manière usuelle, cet élément est souvent désigné par le terme « armature de sommet ».

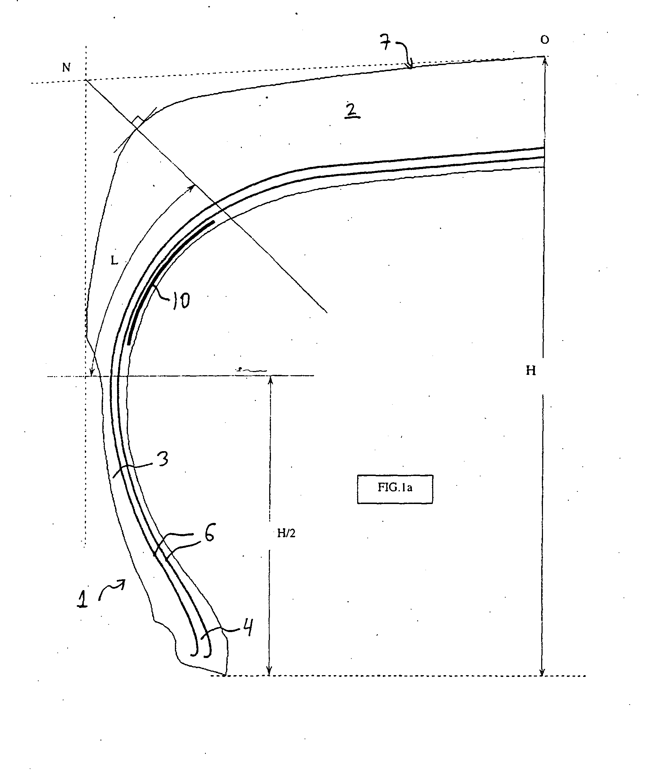

La figure 1a représente de manière schématique une demie coupe radiale d'un pneumatique 1 à armature de carcasse. Ce pneumatique 1 comporte un sommet 2, des flancs 3, des bourrelets 4, deux structures de renfort de type carcasse 6 s'étendant d'un bourrelet à l'autre. Le sommet 2 est surmonté d'une bande de roulement 7. Les structures de renfort 6 sont ancrées dans le bourrelet de façon classique, par exemple soit par enroulement autour d'une tringle, ou de façon interposée entre des enroulements de fils circonférentiels, en coopération avec un mélange caoutchoutique d'ancrage, de préférence à haut module.

Dans les différents exemples illustrés, deux structures de renforts de type carcasse sont présentées. Certains pneumatiques selon l'invention, notamment ceux de type agricole, peuvent comporter un nombre différent de structures, par exemple trois, ou même plus, ou dans certains cas, une seule. Dans le cas de pneumatiques de type bias, on peut compter jusqu'à huit structures de renfort de type carcasse.

Au moins un élément de renfort 10 est disposé à proximité d'au moins une desdites structures de renfort. A la figure 1a, l'élément 10 est positionné, d'une part intérieurement à l'ensemble des structures d renfort 6, et d'autre part, dans la portion radialement extérieure du flanc, entre H/2 et une droite passant par le point N, et perpendiculaire à la surface du pneumatique. Le point N d'extrémité d'épaulement est défini, dans la zone de l'épaule du pneumatique, par la projection orthogonale sur la surface extérieure du pneumatique de l'intersection des tangentes aux surfaces d'une extrémité axialement extérieure de la bande de roulement (sommet des barrettes) d'une part et de l'extrémité radialement extérieure d'un flanc d'autre part.

L'élément de renfort 10 est avantageusement constitué d'un tricot élastique de faible densité apparente et très déformable. Ceci permet une élasticité par glissement des fils et déformation des mailles. Il permet dans une certaine mesure un découplage mécanique entre les différents composants architecturaux entre lesquelles il s'interpose. Par ailleurs, l'avantage d'un tricot élastique est clairement d'avoir suffisamment de souplesse de structure pour suivre les déformations du pneumatique. On pourra ainsi choisir différentes natures de matériau pour former ce tricot élastique : son épaisseur, son taux de vide et sa densité sont directement liés à ce choix et à la structure du tricot (diamètre du fil, nombre de mailles au dm et serrage).

Le tissu biélastique présente au moins l'une et de préférence l'ensemble des caractéristiques suivantes :
- un taux d'allongement élastique d'au moins 8%,
- une taille de maille inférieure ou égale à 150 mailles par décimètres, et de préférence 200 mailles par décimètres.

Par exemple, des essais effectués avec un tricot comportant 240 mailles par décimètre d'un côté, et 235 mailles par décimètre de l'autre côté, ont permis l'obtention de résultats fort intéressants, notamment en terme de résistance à la fissuration.

De manière générale, le tricot biélastique selon l'invention est constitué de fibres synthétiques, de fibres naturelles ou d'un mélange de ces fibres. A titre de fibres synthétiques, le tricot biélastique selon l'invention peut comprendre au moins un type de fibres choisi parmi le polyamide 6, le polyamide 6,6 (nylon), les polyesters, etc.

Ainsi, de manière avantageuse, ledit tissu comprend au moins un matériau choisi parmi les polyamides, les polyesters, la rayonne, le coton, la laine, l'aramide, la soie, le lin.

Selon une variante de réalisation avantageuse, une certaine proportion de fils élastiques tels qu'en polyuréthane, latex, caoutchouc naturel ou synthétique peut s'avérer utile afin d'assurer le rappel élastique, ce qui permet de faciliter la mise en oeuvre du tissu. Ainsi, à titre de tricot biélastique selon l'invention, on peut citer le tricot commercialisé par Milliken sous la référence 2700 composé de 82% de fibre de polyamide 6 et de 18% de polyuréthane de 44 dTex.

Le tissu ou tricot biélastique selon l'invention présente une épaisseur pouvant se situer entre 0,2 mm et 2 mm, et de préférence entre 0,4 et 1,2 mm.

Sa masse surfacique est généralement située entre 70 et 700 g/m2, et de préférence entre 140 et 410 g/m2.

Selon une variante de réalisation, le tricot biélastique est composée d'au moins un polymère choisi parmi les polymères thermodurcissable, les polymères thermoplastiques.

De manière préférentielle, le tricot élastique pourra présenter une masse volumique d'au moins 0,02 g/cm3, mesurée de manière classique, cette masse volumique pouvant aller jusqu'à 0,50 g/cm3.

Une autre caractéristique du tricot élastique utilisable dans le cadre de l'invention est son taux de vide. De manière générale selon l'invention, le taux de vide sera avantageusement d'au moins 40 % pour que le tricot soit suffisamment compressible. Ce taux de vide peut-être calculé en comparant la masse volumique du tricot avec celle du matériau compact constituant sa matrice, mesurée par tout moyen classique.

Parmi les matériaux non élastomériques pouvant constituer la matrice de ces tricots, on peut citer :
- les fibres textiles naturelles, comme le coton, la laine, le lin, le chanvre, la soie, etc.
- les fibres textiles artificielles comme la rayonne;
- des fibres textiles synthétiques par exemple en polyesters, polyamides, aramides, polychlorure de vinyle, polyoléfines etc.
- des fibres minérales par exemple en verre, silice, ou laine de roche.

Parmi les matériaux élastomériques, on peut citer le caoutchouc naturel, le polybutadiène, le SBR, le polyuréthane, etc.

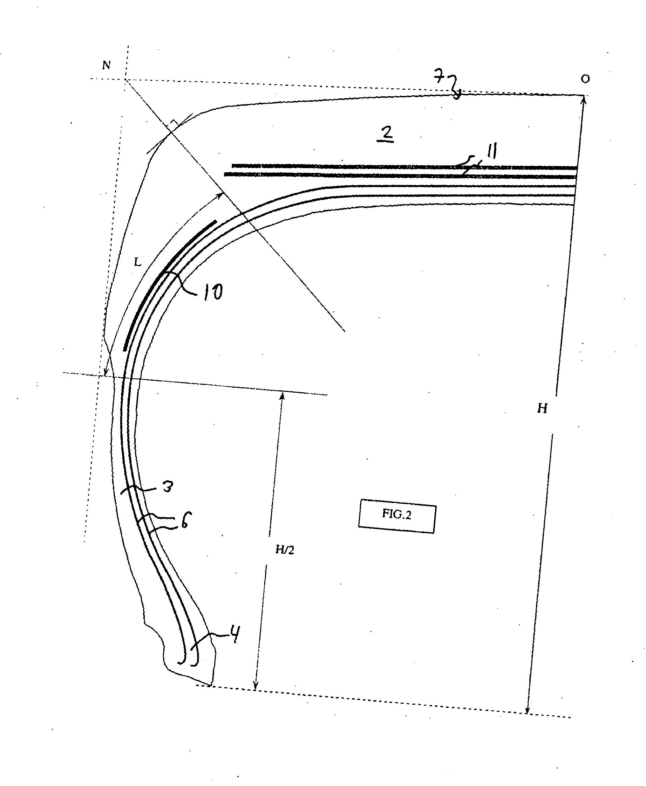

Les figures 2 à 11 illustrent différentes variantes de réalisation dans lesquels la position et/ou le nombre d'éléments de renfort varie. D'autres paramètres peuvent également varier, tels la longueur, la distance par rapport aux structures de renfort, etc.

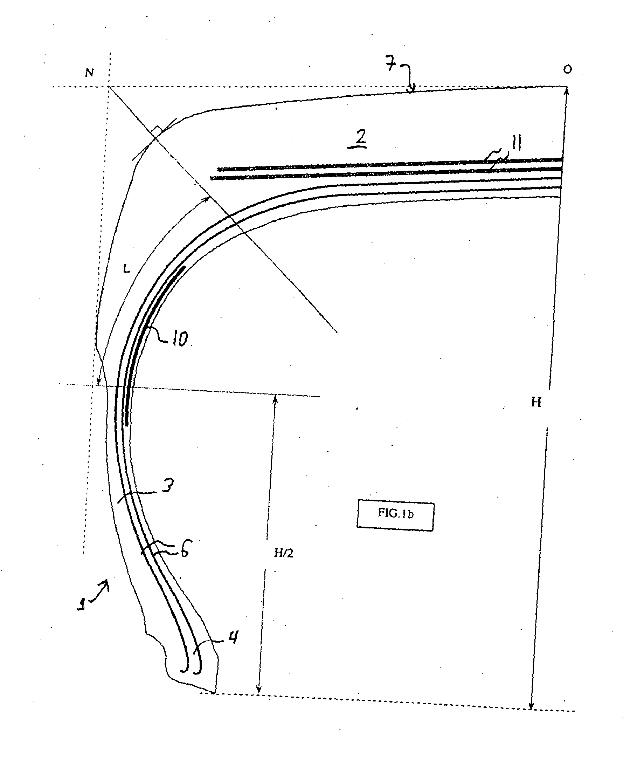

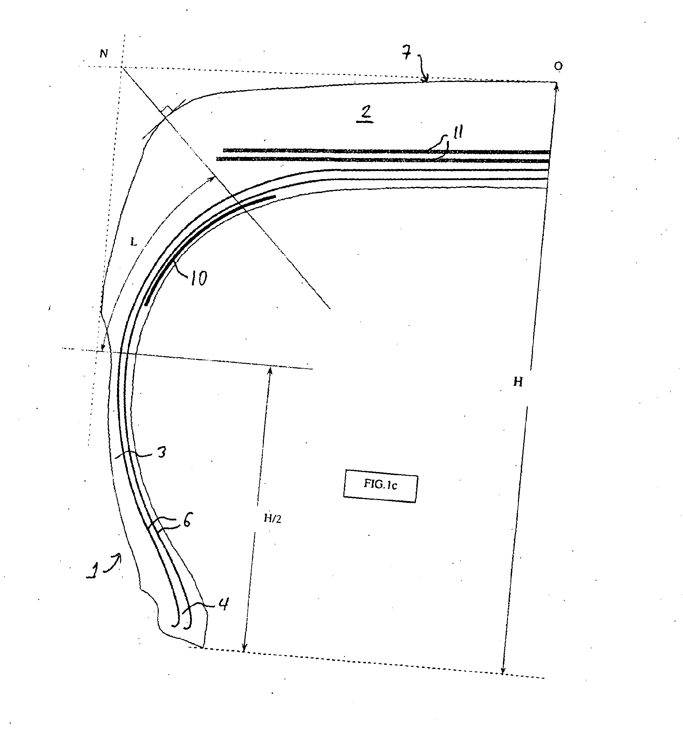

A la figure 1b, ledit élément 10 est positionné un peu plus radialement intérieurement et se prolonge ainsi radialement intérieurement au-delà de la position H/2. A la figure 1c, ledit élément 10 est positionné un peu plus radialement extérieurement et se prolonge ainsi radialement extérieurement au-delà de l'axe passant par le point N.

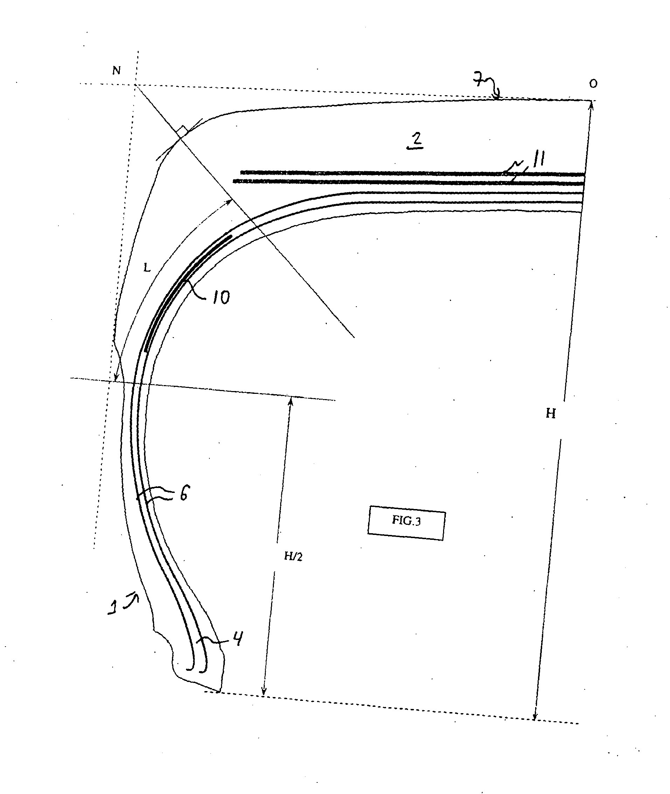

A la figure 2, ledit élément 10 est positionné à l'extérieur des structures de renfort 6, dans la portion radialement extérieure du flanc, similairement à l'exemple de la figure 1a. A la figure 3, l'élément 10 est disposé entre deux structures de renfort 6.

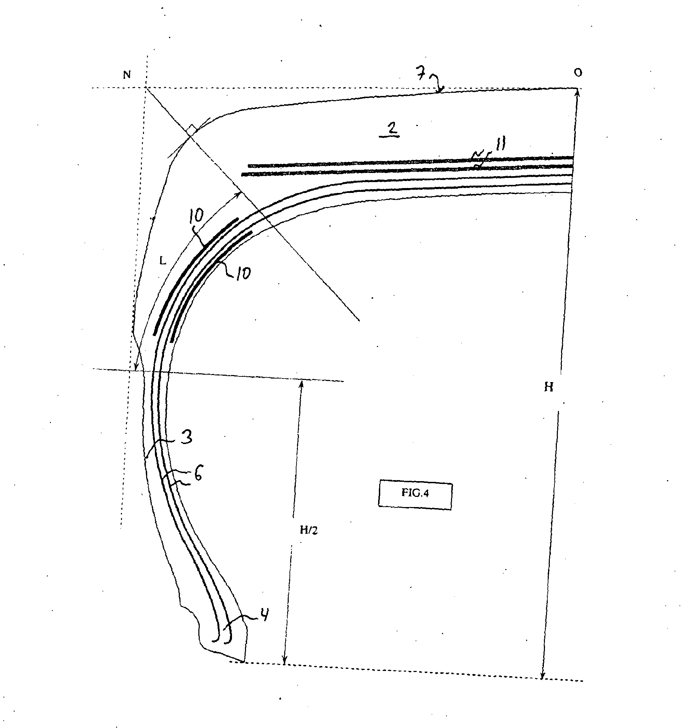

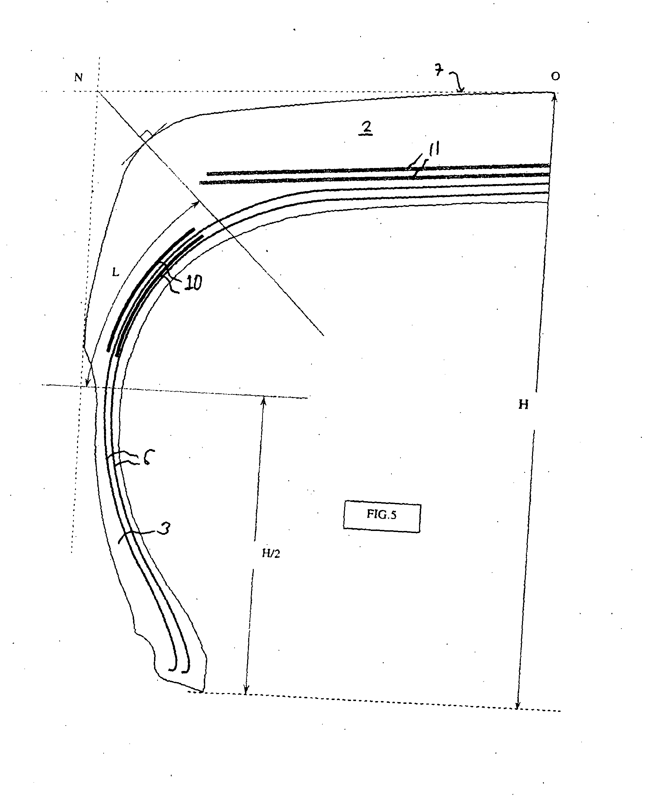

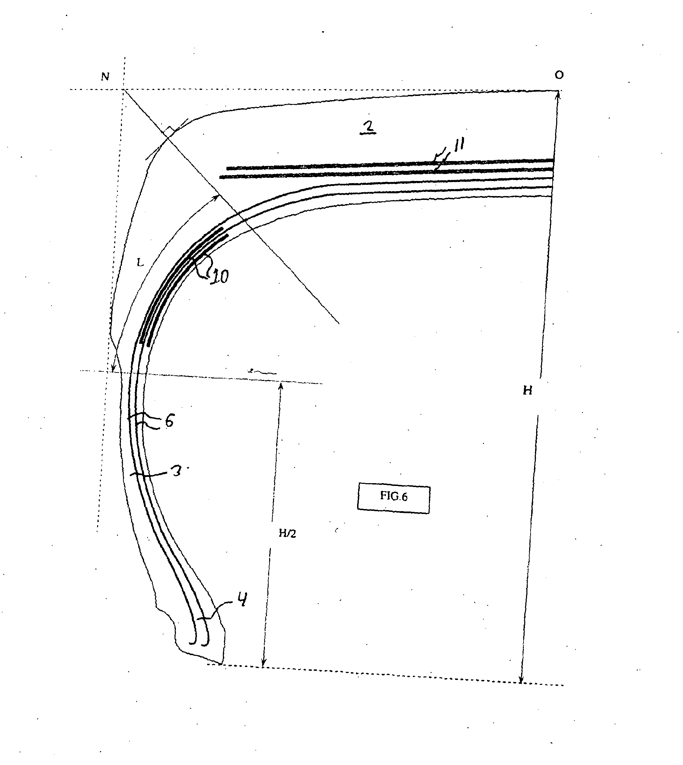

Les figures 4, 5, et 6 présentent des variantes avec deux éléments de renfort 10. A la figure 4, les éléments 10 sont d'une part à l'intérieur et à l'extérieur des structures 10. A la figure 5, un élément est à l'extérieur et l'autre entre les deux structures 10. A la figure 6, un élément est à l'intérieur et l'autre entre les deux structures 10.

Bien que dans ces exemples les éléments soient radialement sensiblement alignés, d'autres variantes non montrées prévoient des configurations dans lesquelles deux ou plus éléments 10 occupent des positions radiales différentes.

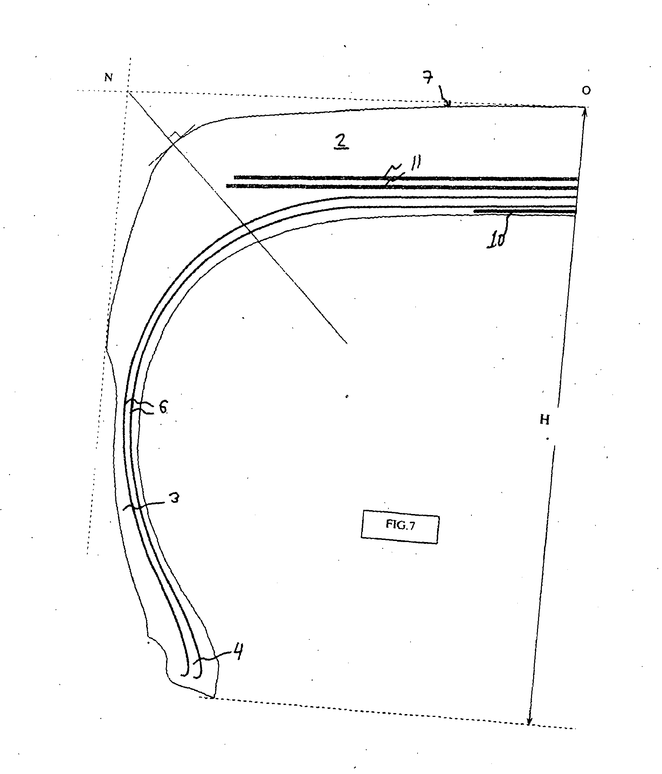

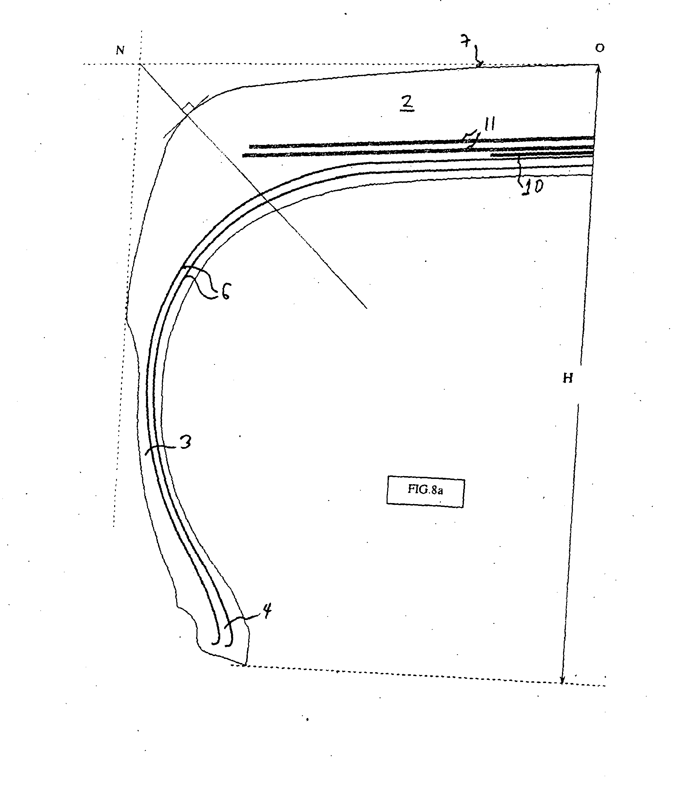

Les figures 7 à 11 présentent des variantes de réalisation dans lesquelles des éléments 10 sont prévus dans la région du sommet du pneumatique. Ainsi, à la figure 7, l'élément 10 est disposé sensiblement axialement centralement, à l'intérieur des structures de renfort 10. A la figure 8a, l'élément 10 est disposé sensiblement axialement centralement, à l'extérieur des structures de renfort 10, entre celles-ci et les couches de renfort de sommet 11.

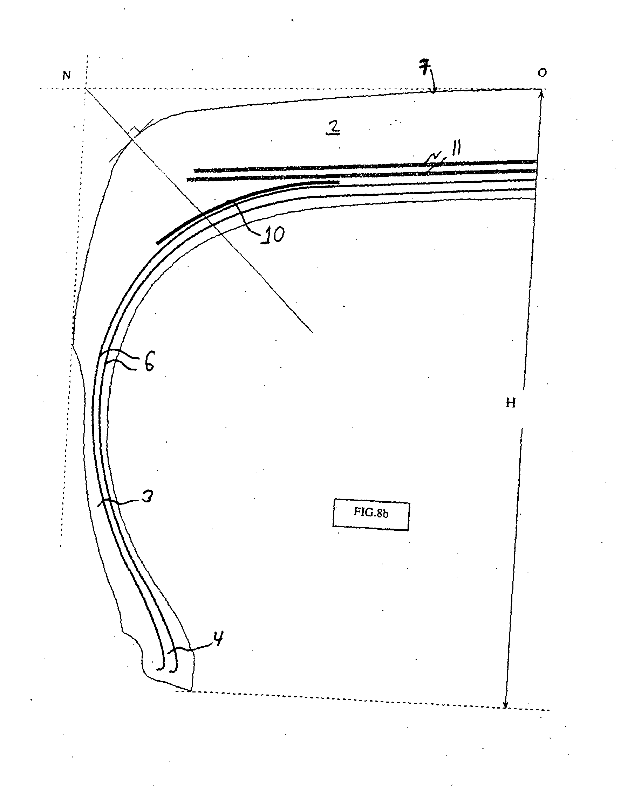

La figure 8b présente une variante dans laquelle l'élément de renfort 10 occupe une position intermédiaire entre d'une part les exemples des figures 1 à 7 et d'autre part les exemples des figures 8a, et 9 à 11. Ainsi, l'élément 10 se situe à la jonction de l'épaule et du sommet, extérieurement aux structures de renfort 10. D'un côté, l'élément 10 se prolonge radialement intérieurement par rapport à la droite qui passe par le point N, et de l'autre, il se prolonge jusqu'à s'immiscer entre les renforts de sommet 11 et les structures de renfort 6 dans la portion où elles se rejoignent.

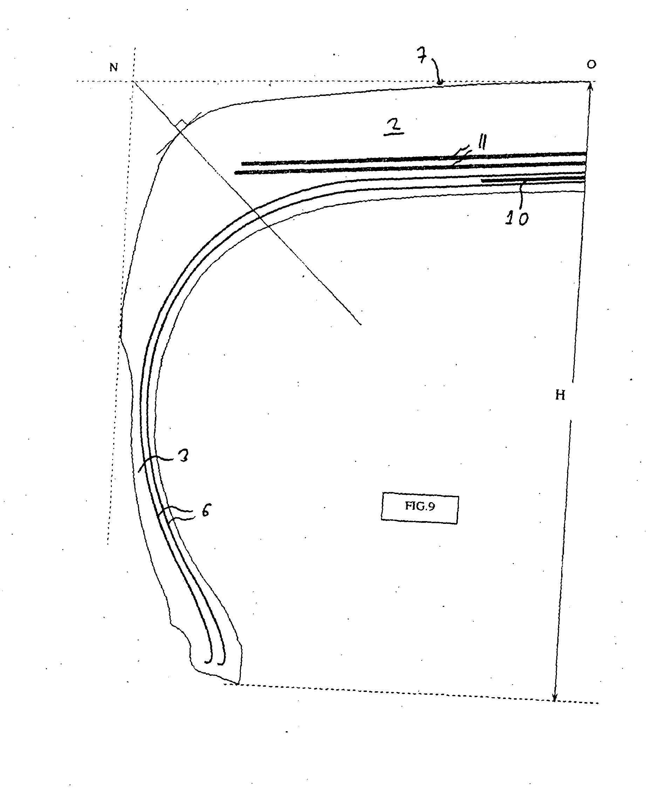

A la figure 9, l'élément 10 est disposé sensiblement axialement centralement, entre les deux structures de renfort 10.

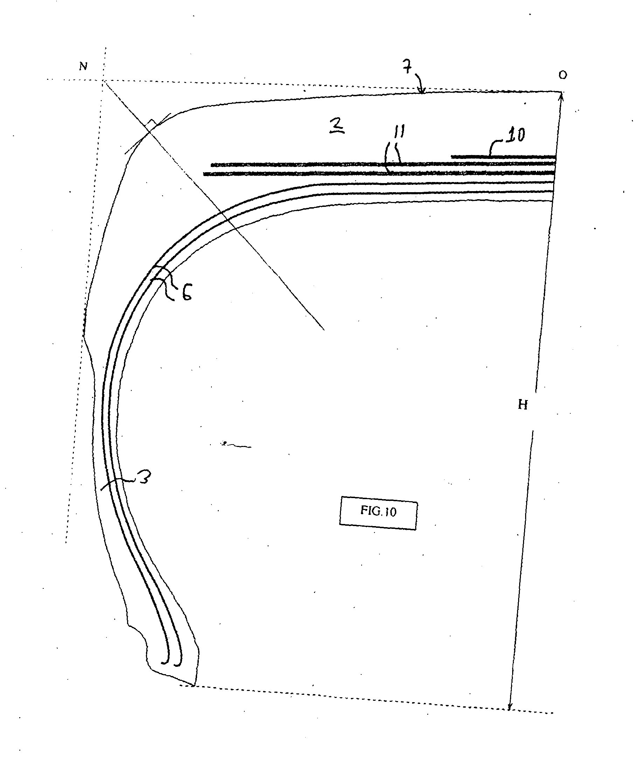

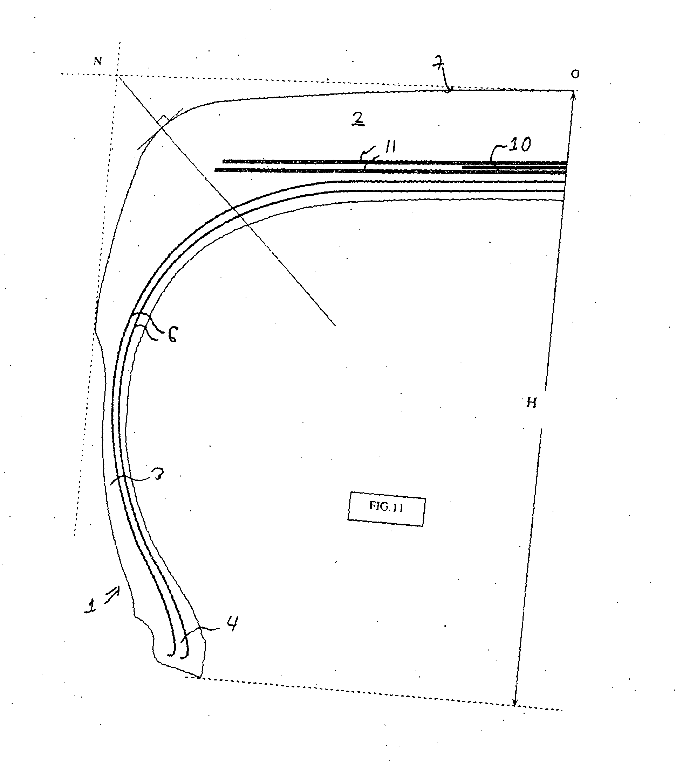

A la figure 10, l'élément 10 est disposé sensiblement axialement centralement, à l'extérieur des renforts de sommet 11, et à la figure 11, l'élément 10 est disposé sensiblement axialement centralement, entre les deux renforts de sommet 11.

## Revendications

1. Pneumatique comprenant au moins une, et de préférence au moins deux, structures de renfort de type carcasse, l'une interne et l'autre externe, chacune desdites structures de renfort de type carcasse s'étendant circonférentiellement depuis le bourrelet vers ledit flanc, et est ancrée de chaque côté du pneumatique dans un bourrelet dont la base est destinée à être montée sur un siège de jante, chaque bourrelet se prolongeant radialement vers l'extérieur par un flanc, les flancs rejoignant radialement vers l'extérieur une bande de roulement, **caractérisé en ce que** ledit pneumatique comporte par ailleurs au moins un élément de renfort biélastique circonférentiel étant constituée d'un tissus biélastique dans lequel ledit tissu utilisé est un tricot biélastique, soit un tissu à mailles dont les boucles formant les mailles sont susceptibles de se déplacer les unes par rapport aux autres dans le sens du tricotage et dans le sens perpendiculaire au tricotage, ledit renfort biélastique étant agencé de façon à s'étendre sensiblement parallèlement le long d'une portion d'une structure de renfort.

2. Pneumatique selon la revendication 1, dans lequel ledit élément de renfort biélastique est en majeure partie positionné dans la portion du flanc située radialement extérieurement à une position correspondant à H/2.

3. Pneumatique selon l'une des revendications 1 ou 2, comportant au moins une structure de renfort de sommet, comprenant chacune une série de fils de renfort de sommet dont chacun est disposé de façon à s'étendre transversalement.

4. Pneumatique selon l'une des revendications 1 ou 3, dans lequel ledit élément de renfort biélastique est en majeure partie positionné dans la zone du sommet du pneumatique.

5. Pneumatique selon l'une des revendications précédentes, dans lequel ledit élément de renfort biélastique comporte une longueur minimale correspondant à 1/10 de l'arc L, l'arc L correspondant sensiblement au parcours des structures de renforts de type carcasse entre la position correspondant à H/2 et une droite passant par le point N et perpendiculaire au point d'intersection avec la portion externe de l'épaule, le point N d'extrémité d'épaulement étant défini , dans la zone de l'épaule du pneumatique, par la projection orthogonale sur la surface extérieure du pneumatique de l'intersection des tangentes aux surfaces d'une extrémité axialement extérieure de la bande de roulement d'une part et de l'extrémité radialement extérieure d'un flanc d'autre part.

6. Pneumatique selon l'une des revendications précédentes, dans lequel le tissu biélastique présente au moins l'une et de préférence l'ensemble des caractéristiques suivantes :
- un taux d'allongement élastique d'au moins 8%,
- une taille de maille inférieure ou égale à 150 mailles par décimètres, et de préférence 200 mailles par décimètres.

7. Pneumatique selon l'une des revendications précédentes, dans lequel ledit tissu comprend au moins un matériau choisi parmi les polyamides, les polyesters, la rayonne, le coton, la laine, l'aramide, la soie, le lin.

8. Pneumatique selon l'une des revendications précédentes, dans lequel le tissu comprend une certaine proportion de fils élastiques.

9. pneumatique selon l'une des revendications précédentes, dans lequel le tissu ou tricot présente une épaisseur pouvant se situer entre 0,2 mm et 2 mm, et de préférence entre 0,4 et 1,2 mm.

10. Pneumatique selon l'une des revendications précédentes, dans lequel le tissu ou tricot présente une masse surfacique généralement située entre 70 et 700 g/m2, et de préférence entre 140 et 410 g/m2.

11. Pneumatique selon l'une des revendications précédentes, dans lequel le tricot biélastique est composée d'au moins un polymère choisi parmi les polymères thermodurcissable, les polymères thermoplastiques.

## Claims

1. Tyre comprising at least one, and preferably at least two, reinforcing structures of the carcass type, one inner and the other outer, each of the said carcass-type reinforcing structures running circumferentially from the bead towards the said sidewall, and is anchored on each side of the tyre in a bead the base of which is configured to be mounted on a rim seat, each bead being extended radially outwards by a sidewall, the sidewalls radially outwards meeting a tread, **characterised in that** the said tyre further comprises at least one circumferential bielastic reinforcing element which is made of a bielastic fabric in which the said fabric used is a bielastic knit, namely a loop mesh fabric the mesh-forming loops of which are able to move relative to one another in the direction of knitting and in the direction perpendicular to the direction of knitting, the said bielastic reinforcement being positioned in such a way as to run substantially parallel along a portion of a reinforcing structure.

2. Tyre according to Claim 1, in which the said bielastic reinforcing element is, for the most part, positioned in that portion of the sidewall that lies radially outside of a position corresponding to H/2.

3. Tyre according to one of Claims 1 and 2, comprising at least one crown reinforcing structure, each comprising a series of crown reinforcing threads each of which is positioned in such a way as to extend transversely.

4. Tyre according to one of Claims 1 or 3, in which the said bielastic reinforcing element is, for the most part, positioned in the crown region of the tyre.

5. Tyre according to one of the preceding claims, in which the said bielastic reinforcing element has a minimum length corresponding to 1/10 of the arc L, the arc L substantially corresponding to the path of the carcass-type reinforcing structures between the position corresponding to H/2 and a straight line passing through the point N and perpendicular to the point of intersection with the outer portion of the shoulder, the end point N of the shoulder being defined, in the shoulder region of the tyre, by the orthogonal projection onto the exterior surface of the tyre of the intersection between, on the one hand, the tangents to the surfaces of an axially outside end of the tread and, on the other hand, the radially outside end of a sidewall.

6. Tyre according to one of the preceding claims, in which the bielastic fabric has at least one and preferably all of the following properties:
- an elastic elongation of at least 8%,
- a mesh size smaller than or equal to 150 meshes per decimetre and preferably 200 meshes per decimetre.

7. Tyre according to one of the preceding claims, in which the said fabric comprises at least one material chosen from polyamides, polyesters, rayon, cotton, wool, aramide, silk and linen.

8. Tyre according to one of the preceding claims, in which the fabric contains a certain proportion of elastic threads.

9. Tyre according to one of the preceding claims, in which the fabric or knit has a thickness ranging between 0.2 mm and 2 mm and preferably between 0.4 and 1.2 mm.

10. Tyre according to one of the preceding claims, in which the fabric or knit has a basis weight generally of between 70 and 700 g/m² and preferably between 140 and 410 g/m².

11. Tyre according to one of the preceding claims, in which the bielastic knit is made of at least one polymer chosen from thermosetting polymers and thermoplastic polymers.

## Patentansprüche

1. Luftreifen, der mindestens eine, und vorzugsweise mindestens zwei Verstärkungsstrukturen vom Typ Karkasse aufweist, die eine außen und die andere innen, wobei jede der Verstärkungsstrukturen vom Typ Karkasse sich in Umfangsrichtung vom Wulst zur Flanke erstreckt und auf jeder Seite des Luftreifens in einem Wulst verankert ist, dessen Basis dazu bestimmt ist, auf einen Felgensitz montiert zu werden, wobei jeder Wulst sich radial nach außen durch eine Flanke verlängert, wobei die Flanken radial nach außen an eine Lauffläche anschließen, **dadurch gekennzeichnet, dass** der Luftreifen außerdem mindestens ein bielastisches Umfangsverstärkungselement aufweist, das aus einem bielastischen Gewebe besteht, wobei das verwendete Gewebe ein bielastisches Strickgewebe ist, d.h. ein Gewebe mit Maschen, dessen die Maschen bildende Schleifen sich zueinander in Richtung des Gestricks und in Richtung lotrecht zum Gestrick verschieben können, wobei die bielastische Verstärkung so angeordnet ist, dass sie sich im Wesentlichen parallel entlang eines Abschnitts einer Verstärkungsstruktur erstreckt.

2. Luftreifen nach Anspruch 1, bei dem das bielastische Verstärkungselement zum größten Teil in dem Abschnitt der Flanke positioniert ist, der sich radial außerhalb einer Position entsprechend H/2 befindet.

3. Luftreifen nach einem der Ansprüche 1 oder 2, der mindestens eine Scheitelverstärkungsstruktur aufweist, die je eine Reihe von Scheitelverstärkungsfäden enthalten, von denen jeder so angeordnet ist, dass er sich quer erstreckt.

4. Luftreifen nach einem der Ansprüche 1 oder 3, bei dem das bielastische Verstärkungselement zum größten Teil in der Scheitelzone des Luftreifens positioniert ist.

5. Luftreifen nach einem der vorhergehenden Ansprüche, bei dem das bielastische Verstärkungselement eine minimale Länge entsprechend 1/10 des Bogens L aufweist, wobei der Bogen L im Wesentlichen dem Verlauf der Verstärkungsstrukturen vom Typ Karkasse zwischen der Position entsprechend H/2 und einer Geraden entspricht, die durch den Punkt N verläuft und lotrecht zum Schnittpunkt mit dem äußeren Abschnitt der Schulter ist, wobei der Schulterendpunkt N in der Zone der Schulter des Luftreifens durch die orthogonale Projektion auf die Außenfläche des Luftreifens des Schnittpunkts der Tangenten an den Flächen eines axial äußeren Endes der Lauffläche einerseits und des radial äußeren Endes einer Flanke andererseits definiert wird.

6. Luftreifen nach einem der vorhergehenden Ansprüche, bei dem das bielastische Gewebe mindestens eines und vorzugsweise alle der folgenden Merkmale aufweist:
- einen elastischen Dehnungsgrad von mindestens 8%,
- eine Maschengröße geringer als oder gleich 150 Maschen pro Dezimeter, und vorzugsweise 200 Maschen pro Dezimeter.

7. Luftreifen nach einem der vorhergehenden Ansprüche, bei dem das Gewebe mindestens ein Material enthält, das aus den Polyamiden, den Polyestern, Rayon, Baumwolle, Wolle, Aramid, Seide, Flachs ausgewählt wird.

8. Luftreifen nach einem der vorhergehenden Ansprüche, bei dem das Gewebe einen bestimmten Anteil von elastischen Fäden enthält.

9. Luftreifen nach einem der vorhergehenden Ansprüche, bei dem das Gewebe oder Strickgewebe eine Dicke hat, die zwischen 0,2 mm und 2 mm, und vorzugsweise zwischen 0,4 und 1,2 mm liegen kann.

10. Luftreifen nach einem der vorhergehenden Ansprüche, bei dem das Gewebe oder Strickgewebe eine flächenbezogene Masse hat, die allgemein zwischen 70 und 700 g/m2, und vorzugsweise zwischen 140 und 410 g/m2 liegt.

11. Luftreifen nach einem der vorhergehenden Ansprüche, bei dem das bielastische Strickgewebe aus mindestens einem Polymer besteht, das aus den wärmehärtbaren Polymeren und den thermoplastischen Polymeren ausgewählt wird.
